# EUROPEAN PATENT SPECIFICATION

(11) **EP 4 353 933 B1**
(45) Date of publication and mention of the grant of the patent: **01.04.2026**
(21) Application number: 22200544.9
(22) Date of filing: 10.10.2022
(51) Int. Cl.: E05F 3/12, F16K 1/04, F16K 17/00, F16K 17/38

(54) **AN ADJUSTING DEVICE**
EINSTELLVORRICHTUNG
DISPOSITIF DE RÉGLAGE

(43) Date of publication of application: 17.04.2024
(73) Proprietor: Abloy Oy, 80100 Joensuu (FI)
(72) Inventor: Tolonen, Jouko, 80100 Joensuu (FI); Pekkonen, Pekka, 80100 Joensuu (FI)
(74) Representative: Berggren Oy

(56) References cited:
- EP-A1- 4 015 752
- DE-B3- 102014 222 210
- DE-B3- 102015 223 748

## Description

### Field of technology

The invention relates to door closers, particularly a door closer adjusting device that regulates the flow of a pressure medium controlling the function of a door closer.

### Prior art

The purpose of a door closer is to close a door after being opened, eliminating the need to separately close it. A known door closer has a shaft, which is connected to a lever arm for example. The other end of the lever arm can be fixed to a door or a door frame, depending on how the door closer has been installed, either on a door or on the door frame. The door closer has also a spring and a piston. The piston is connected to the shaft. When the door is opened, the lever arm turns the shaft, which moves the piston. The moving piston compresses the spring. Once the door has been opened, the spring imposes a pushing force on the piston, which turns the shaft. The turning motion of the shaft moves the lever arm to close the door.

To make the door closer function smooth, a pressure medium flowing from one side of the piston to another is used in door closers. The flow of the pressure medium affects the speed of the door closing. The pressure medium is generally oil suitable for the purpose. There is a channel or channels for the pressure medium in the door closer body and at least one control valve, usually at least two control valves, interconnected with the channel/s in order to control a pressure medium flow in a door closer. The aim is to adjust the closing speed (and opening speed) of the door. A usual control valve can be moved in the axial direction by turning it from the end of the guiding part (using an Allen wrench, for example, if a hex socket is formed at the end). The known adjusting devices like a control valves, works fine in normal conditions.

DE 10 2014 222210 B3 discloses a safety valve which is activated in the event of manual overpressure of the door or window. The activated safety valve opens an extra route for the oil to flow to a space having a lower pressure. EP 4 015 752 A1 discloses a valve mechanism having a fixing member and a barrier member, and DE 10 2015 223748 B3 discloses a hydraulic chamber filled with hydraulic fluid and a pressure compensation chamber, which is separated from the hydraulic chamber by a closure. The closure is in a hole of a sleeve.

However, when a fire situation occurs, environmental stress to a door closer can be exceptionally powerful, and then the door closer is not expected to work normally.

During a fire, door closers should not promote the fire. Flames are considered to promote the fire. The oil temperature and pressure inside a door closer increase during the fire, and the door closer may crack and the heated oil can flame.

### Short description

The object of the invention is to provide a solution for a door closer, which takes into account fire situations so that the door closer does not promote the fire. The object is achieved in a way described in the independent claim. Dependent claims illustrate different embodiments of the invention.

The solution according to the invention utilizes a door closer's adjusting device according to claim 1 to release the oil or other liquid inside the door closer outside the door closer. It is performed in such a way that the adjusting device can work normally in normal conditions, but in case of temperature and pressure above normal conditions, like fire, it allows the oil/liquid to flow outside from the door closer.

An inventive solution comprises an adjusting device 1 for controlling a pressure medium flow in a door closer utilizing a pressure medium. The pressure medium is oil or other suitable liquid for the door closer. The adjusting device comprises a body 7 having a guiding part 9 of the adjusting device and a thread fillet 8. The adjusting device is supportable on a body of the door closer using the thread fillet. The body 7 also comprises a control part 10, 10A.

The adjusting device 1 is movable in its axial direction in relation to the door closer body by turning the adjusting device when the adjusting device is supported on the door closer body. A desired restriction of the pressure medium flow by the control part can be achieved by said axial movement. Further, the adjusting device 1 has a channel 4 through it, in its axial direction, and a plug 3, 3A, 3B, 3C in the channel.

The plug 3, 3A, 3B, 3C is arranged to prevent the pressure medium to flow out of the door closer through the channel 4 in a normal use of the door closer, and being arranged to give way due to temperature and pressure above normal conditions, for example in a fire situation, allowing the pressure medium to flow out of the door closer through the channel 4 when the adjusting device is supported on the door closer body.

### List of figures

In the following, the invention is described in more detail by reference to the enclosed drawings, where
- Figure 1: shows a simple example of an adjusting device installed on the door closer,
- Figure 2: illustrates an example of an adjusting device according to the invention,
- Figure 3: illustrates another example of an adjusting device according to the invention,
- Figure 4: illustrates, yet another example of an adjusting device according to the invention, and
- Figure 5: illustrates yet an further example of an adjusting device according to the invention.

### Description of the invention

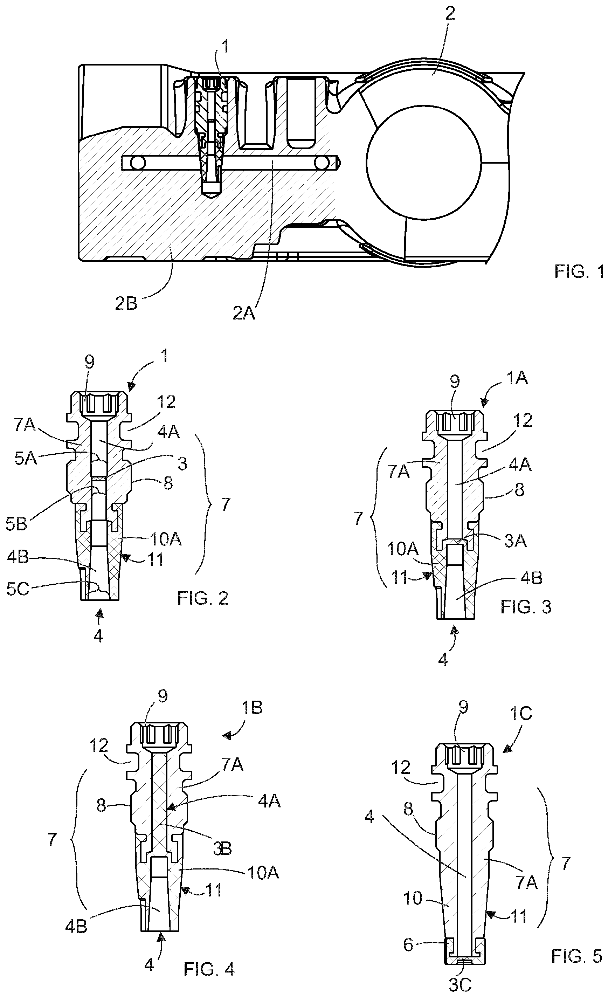

Figure 1 illustrates a simple example of an adjusting device 1 according to the invention installed on the door closer 2. As said above the door closer has shaft, a spring and a piston. The piston is connected to the shaft. The shaft, spring and piston are not illustrated in figure 1 since they are known parts as such. Also, the functioning of the door closer is known. In order to function smoothly the door closer has pressure medium inside, like oil or other suitable liquid. There are also channel/channels in the door closer wherein the pressure medium can flow from side to side of the piston. The example of figure 1 shows a simplified channel/s 2A and only one adjusting device 1 for illustrating the invention more clearly. As said, the oil/liquid can flow in the channel/s 2A.

Figures 2 - 5 show different embodiments of the adjusting device 1, 1A, 1B, 1C according to the invention. An embodiment according to the invention comprises an adjusting device 1, 1A, 1B, 1C for controlling a pressure medium flow in a door closer utilizing a pressure medium. The pressure medium is oil or other suitable liquid for the door closer. The adjusting device comprises a body 7 having a guiding part 9 of the adjusting device and a thread fillet 8. The adjusting device is supportable on a body 2B of the door closer using the thread fillet. The body 7 also comprises a control part 10, 10A. The adjusting device has a groove 12 for a gasket ring (the gasket not shown in figures 2 - 5).

As can be in the figures the control part 10, 10A can comprise a bezel area 11. The bezel area is arrangeable to be partly in the channel/s 2A as figure 1 illustrates. By moving the adjusting device 1 in its axial direction, it is possible to control the pressure medium flow in the channel/s and thus adjusting the functioning of the door closer.

Further, it can be seen in the figures that the body 7 can be made from one part, or it can be made from separate parts. Figures 2 - 4 illustrate embodiments where the body 7 comprises two parts, and these parts have been connected to each other. In these embodiments the body is made from said control part 10A and a metal part 7A having said thread fillet 8 and said guiding part 9. Material for the control part can be any material, which is suitable for the purpose of the control part. The control part 10A can be plastic, which has been found to be suitable. But also, some metal alloys and other materials can be used. Any case the channel, i.e. 4, 4A with 4B, is through the body 7, so through the metal part 7A and the control part 10A in the embodiments of figures 2 - 7.

So, the adjusting device 1 is movable in its axial direction in relation to the door closer body by turning the adjusting device when the adjusting device is supported on the door closer body. A desired restriction of the pressure medium flow by the control part can be achieved by said axial movement. Further, the adjusting device 1 has a channel 4 through it, in its axial direction, and a plug 3, 3A, 3B, 3C in the channel.

The plug 3, 3A, 3B, 3C is arranged to prevent the pressure medium to flow out of the door closer through the channel 4 in a normal use of the door closer, and being arranged to give way due to temperature and pressure above normal conditions, like in a fire situation, allowing the pressure medium to flow out of the door closer through the channel 4 when the adjusting device is supported on the door closer body 2B.

So, the plug must stand during a normal use of the door closer. Therefore, the adjusting device 1, 1A, 1B, 1C, 1D works normally for controlling the pressure medium flow. In a fire situation, the plug gives way allowing the pressure medium to flow out of the door closer through the channel 4 before the door closer cracks. The cracking of the door closer may happen due to increased oil/liquid temperature and increased oil/liquid pressure. In that case the oil/liquid can flame easily. If the oil/liquid is allowed to flow out of the door closer before the cracking, the flaming of the oil/liquid can be avoided, since the out-flowing oil/liquid vaporizes instead of to flame.

There are door closers for different use categories, like for doors having different weights and sizes. Therefore, the temperature and pressure conditions may vary between different door closers. For example, a certain door closer type/category the cracking of the body of the door closer occurs at 160 bar, and in normal conditions the oil/liquid pressure may rise to about 120 bar. So, the plug 3, 3A, 3B, 3C according to the invention must stand 120 bar and give way under 160 bar (at range above 120 bar - under 160 bar) within this door closer type/category. Also, the temperature conditions are taken into account. The door closers are normally used below 50 Celsius. The flaming of the oil/liquid happen at about 100 Celsius or above. So, the plug 3, 3A, 3B, 3C according to the invention must give way about at range 60 - 100 Celsius. As can be noted, the pressure and temperature conditions must be taken into account that the plug 3, 3A, 3B, 3C can prevent the pressure medium to flow out of the door closer through the channel 4 in a normal use of the door closer, and to give way in a fire situation allowing the pressure medium to flow out of the door closer. The above-mentioned pressure and temperature ranges apply at least to one door closer type/category.

In order that the plug can give way, it 3, 3A, 3B, 3C is a melting material due to temperature and pressure. The plug 3, 3A, 3B, 3C is plastic or a composite material for example. As discussed above the material stands under normal use of the door closer, but when temperature has raised and the oil/liquid pressure increased in the door closer, the material give way (like melts, becomes softer, and/or breaks) and the channel 4 through the adjusting device opens. It means that the oil/liquid can flow outside the door closer.

The thickness of the plug 3, 3A, 3B, 3C can vary depending on an embodiment. Material choice for the plug has an effect on the thickness of the plug. Some materials may stand temperature and pressure better than other materials. The thickness can be small or relatively great as figures 2 - 5 illustrate. The thickness can be less than a diameter of the channel 4 (figure 2 for example). The thickness of the plug 3, 3A, 3B, 3C can also be greater or equal than a diameter of the channel 4 (figure 4). In the embodiment of figure 2 there is a step above the plug 3 to have a larger diameter of the channel 4A than below the plug. The diameter may also change continuously as figures 2 - 4 illustrate. The figures show that the channel 4B inside the control part 10 A has a conical surface. So, when referring to the diameter in relation to the thickness of the plug, it means the diameter of channel at the location of the plug 3, 3A, 3B, 3C in this context.

Figures 2 - 4 illustrate embodiments wherein the body 7 comprises the control part 10A and a metal part 7A having said thread fillet 8 and said guiding part 9. The control part 10A is plastic, and the channel 4 is through the metal part and the control part. It is worth to note that the channel 4 comprises part specific channels 4A (the metal part 7A) and 4B (the control part 10A) in these embodiments.

The plug 3A, 3B can be a part of the control part 10A, and the plug's thickness can be less than a diameter of the channel 4 (figure 3), or greater than the diameter of the channel 4 (figure 4) or equal than the diameter of the channel 4.

The plug can also be situated in different locations in the channel 4. The plug 3 in the channel 4 can be aligned with the thread fillet 8 as illustrated in figure 2. The plug 3C can also be located in a control part end of the channel 4 as be seen in figure 5. Further, the plug 3 can be located in the channel 4 at a location between the thread fillet 8 and the guiding part 9. As already said, the control part 10, 10A comprises a bezel area 11, and the plug 3, 3A, 3B in the channel can be aligned with the bezel area. The plug 3A, 3B can also be at least partly between the bezel area 11 and the thread fillet 8 (figures 3 and 4). Further, when the plug 3C is located in a control part end of the channel 4 (figure 5), the plug may comprise an annular projection 6 in order to attach the plug with the body 7.

Also, the diameter of the channel can have an influence on how the plug stands in normal conditions and when it gives way. The diameter 5A, 5B, 5C of the channel can have at least two different values at different locations in the channel. See figures 2 - 4. Figure 5 shows an embodiment where the channel 4 has only one diameter value.

The adjusting device 1, 1A, 1B 1C can, of course, be attached with the door closer as can be seen in figure 1. The door closer can be attached to a door, which could be at the bottom side of the door closer when referring to figure 1. So if, for example, a fire situation occurs the hotter side of the door closer (The door side is considered to be hotter.) is at the bottom of figure 1. How heat conducts in the door closer and to the adjusting device, can have influence on the location where the plug is situated and also what thickness of the plug is used.

The adjusting device 1, 1A, 1B, 1C, according to the invention can be situated onto any suitable place. In other words, the inventive adjusting device can replace a control valve of a door closer, like L, C, D, or B valve. The L valve is for controlling the closing speed of a door at the end phase (for example between 0 - 20 degrees). The C valve is for controlling the closing speed of a door generally (for example between 20 - 190 degrees). The D valve is for controlling the closing speed of a door at the beginning (for example between 85 - 190 degrees). The B valve is for controlling the opening speed of a door at the end phase. In figure 1, the adjusting device 1 is situated onto place of the L-valve. Another control valve or valves are not shown in figure 1.

The invention is a cost saving and space-saving solution for a door closer not to promote fire. An additional bore/s and space are not needed when using the adjusting device according to the invention.

It is evident from the above that the invention is not limited to the embodiments described in this text but can be implemented utilizing many other different embodiments within the scope of the independent claim.

## Claims

1. An adjusting device (1) for controlling a pressure medium flow in a door closer, which adjusting device comprises a body (7) having a guiding part (9) of the adjusting device, the end of the guiding part being turnable by a tool like a wrench
in order to move the adjusting device in an axial direction, and a thread fillet (8), the adjusting device being supportable on a body of the door closer using the thread fillet, the body (7) also comprising a control part (10, 10A),
the adjusting device (1) being movable in its axial direction in relation to the door closer body by turning the adjusting device when the adjusting device being supported on the door closer body, in order to result in a desired restriction of the pressure medium flow by the control part (10, 10A), **characterised in that** the adjusting device has a channel (4) through the adjusting device (1) in its axial direction, and a plug (3, 3A, 3B, 3C) in the channel,
the plug (3, 3A, 3B, 3C) being arranged to prevent the pressure medium to flow out of the door closer through the channel (4) in a normal use of the door closer, and being arranged to give way due to temperature and pressure above normal conditions, allowing the pressure medium to flow out of the door closer through the channel (4) when the adjusting device being supported on the door closer body.

2. An adjusting device according to claim 1, **characterised in that** thickness of the plug (3, 3A, 3B, 3C) is less than a diameter of the channel (4).

3. An adjusting device according to claim 1, **characterised in that** thickness of the plug (3, 3A, 3B, 3C) is greater or equal than a diameter of the channel (4).

4. An adjusting device according to claim 1, **characterised in that** the body (7) comprises said control part (10A) and a metal part (7A) having said thread fillet (8) and said guiding part (9), the control part (10A) being plastic, and the channel (4) is through the metal part and the control part, which plug (3A, 3B) is a part of the control part, and the plug's thickness is less than a diameter of the channel (4), or greater than the diameter of the channel (4) or equal than the diameter of the channel (4).

5. An adjusting device according to claim 2 or 3, **characterised in that** the plug (3) is in the channel (4) and aligned with the thread fillet (8).

6. An adjusting device according to claim 2, 3 or 4, **characterised in that** the plug (3C) is located in a control part end of the channel (4).

7. An adjusting device according to claim 2 or 3, **characterised in that** the plug (3) is located in the channel (4) at a location between the thread fillet (8) and the guiding part (9).

8. An adjusting device according to claim 2 or 3, **characterised in that** the control part (10, 10A) comprises a bezel area (11), and the plug (3, 3A, 3B) is in the channel and aligned with the bezel area.

9. An adjusting device according to claim 1, 3 or 4, **characterised in that** the control part (10, 10A) comprises a bezel area (11), and the plug (3A, 3B) is in the channel, at least partly between the bezel area (11) and the thread fillet (8).

10. An adjusting device according to claim 2 or 3, **characterised in that** the plug (3C) is located in a control part end of the channel (4), and the plug comprises an annular projection (6) in order to attach the plug with the body (7).

11. An adjusting device according to any of claims 1 - 10, **characterised in that** the plug (3, 3A, 3B, 3C) is plastic.

12. An adjusting device according to any of claims 1 - 11, **characterised in that** at different locations in the channel, the diameter (5A, 5B, 5C) of the channel has at least two different values.

13. An adjusting device according to any of claims 1 - 12, **characterised in that** the adjusting device (1, 1A, 1B 1C) is attached with the door closer.

14. An adjusting device according to any of claims 1 - 13, **characterised in that** the plug (3, 3A, 3B, 3C) is a melting material giving away about at range 60 - 100 Celsius and at range above 120 bar - under 160 bar.

## Patentansprüche

1. Einstellvorrichtung (1) zum Steuern eines Druckmediumflusses in einem Türschließer, wobei die Einstellvorrichtung einen Körper (7) mit einem Führungsteil (9) der Einstellvorrichtung aufweist, wobei das Ende des Führungsteils durch ein Werkzeug wie einen Schraubenschlüssel
gedreht werden kann, um die Einstellvorrichtung in einer axialen Richtung zu bewegen, und eine Gewinderille (8), wobei die Einstellvorrichtung unter Verwendung der Gewinderille an einem Körper des Türschließers gehalten werden kann, wobei der Körper (7) auch ein Steuerteil (10, 10A) aufweist,
die Einstellvorrichtung (1) in ihrer axialen Richtung in Bezug auf den Türschließerkörper durch Drehen der Einstellvorrichtung bewegt werden kann, wenn die Einstellvorrichtung auf dem Türschließerkörper abgestützt ist, um eine gewünschte Begrenzung des Druckmediumflusses durch das Steuerteil (10, 10A) zu bewirken, **dadurch gekennzeichnet, dass** die Einstellvorrichtung einen Kanal (4) durch die Einstellvorrichtung (1) in ihrer axialen Richtung und einen Stopfen (3, 3A, 3B, 3C) in dem Kanal aufweist,
der Stopfen (3, 3A, 3B, 3C) so angeordnet ist, dass er verhindert, dass das Druckmedium bei normalem Gebrauch des Türschließers durch den Kanal (4) aus dem Türschließer fließt, und so angeordnet ist, dass er aufgrund von Temperatur und Druck über den normalen Bedingungen nachgibt, sodass das Druckmedium durch den Kanal (4) aus dem Türschließer fließen kann, wenn die Einstellvorrichtung auf dem Türschließerkörper gestützt wird.

2. Einstellvorrichtung nach Anspruch 1, **dadurch gekennzeichnet, dass** die Dicke des Stopfens (3, 3A, 3B, 3C) geringer ist als ein Durchmesser des Kanals (4).

3. Einstellvorrichtung nach Anspruch 1, **dadurch gekennzeichnet, dass** die Dicke des Stopfens (3, 3A, 3B, 3C) größer oder gleich einem Durchmesser des Kanals (4) ist.

4. Einstellvorrichtung nach Anspruch 1, **dadurch gekennzeichnet, dass** der Körper (7) das Steuerteil (10A) und ein Metallteil (7A) mit der Gewinderille (8) und dem Führungsteil (9) aufweist, wobei das Steuerteil (10A) aus Kunststoff ist, und der Kanal (4) durch das Metallteil und das Steuerteil verläuft, wobei der Stopfen (3A, 3B) ein Teil des Steuerteils ist und die Dicke des Stopfens kleiner als ein Durchmesser des Kanals (4) oder größer als der Durchmesser des Kanals (4) oder gleich dem Durchmesser des Kanals (4) ist.

5. Einstellvorrichtung nach Anspruch 2 oder 3, **dadurch gekennzeichnet, dass** sich der Stopfen (3) im Kanal (4) befindet und mit der Gewinderille (8) fluchtet.

6. Einstellvorrichtung nach Anspruch 2, 3 oder 4, **dadurch gekennzeichnet, dass** sich der Stopfen (3C) in einem Steuerteil am Ende des Kanals (4) befindet.

7. Einstellvorrichtung nach Anspruch 2 oder 3, **dadurch gekennzeichnet, dass** der Stopfen (3) in dem Kanal (4) an einer Stelle zwischen der Gewinderille (8) und dem Führungsteil (9) angeordnet ist.

8. Einstellvorrichtung nach Anspruch 2 oder 3, **dadurch gekennzeichnet, dass** der Steuerteil (10, 10A) einen Blendenbereich (11) umfasst und der Stecker (3, 3A, 3B) sich in dem Kanal befindet und auf den Blendenbereich ausgerichtet ist.

9. Einstellvorrichtung nach Anspruch 1, 3 oder 4, **dadurch gekennzeichnet, dass** der Steuerteil (10, 10A) einen Blendenbereich (11) umfasst und der Stopfen (3A, 3B) in dem Kanal mindestens teilweise zwischen dem Blendenbereich (11) und der Gewinderille (8) liegt.

10. Einstellvorrichtung nach Anspruch 2 oder 3, **dadurch gekennzeichnet, dass** sich der Stopfen (3C) in einem Steuerteil am Ende des Kanals (4) befindet und der Stopfen einen ringförmigen Vorsprung (6) umfasst, um den Stopfen mit dem Körper (7) zu verbinden.

11. Einstellvorrichtung nach einem der Ansprüche 1 bis 10, **dadurch gekennzeichnet, dass** der Stopfen (3, 3A, 3B, 3C) aus Kunststoff ist.

12. Einstellvorrichtung nach einem der Ansprüche 1 bis 11, **dadurch gekennzeichnet, dass** der Durchmesser (5A, 5B, 5C) des Kanals an verschiedenen Stellen des Kanals mindestens zwei unterschiedliche Werte aufweist.

13. Einstellvorrichtung nach einem der Ansprüche 1 bis 12, **dadurch gekennzeichnet, dass** die Einstellvorrichtung (1, 1A, 1B 1C) mit dem Türschließer verbunden ist.

14. Einstellvorrichtung nach einem der Ansprüche 1 bis 13, **dadurch gekennzeichnet, dass** der Stopfen (3, 3A, 3B, 3C) ein schmelzendes Material ist, das etwa im Bereich von 60-100 Celsius und im Bereich von über 120 bar bis unter 160 bar abgibt.

## Revendications

1. Dispositif de réglage (1) pour commander le débit d'un fluide sous pression dans un ferme-porte, le dispositif de réglage comprenant un corps (7) doté d'une partie de guidage (9) dont l'extrémité peut être actionnée par un outil tel qu'une clé.
afin de déplacer le dispositif de réglage dans une direction axiale, et un congé de filetage (8), le dispositif de réglage étant supporté sur un corps de ferme-porte à l'aide du congé de filetage, le corps (7) comprenant également une partie de commande (10, 10A),
le dispositif de réglage (1) étant mobile dans sa direction axiale par rapport au corps du ferme-porte en tournant le dispositif de réglage lorsqu'il est supporté par le corps du ferme-porte, afin d'obtenir une restriction souhaitée du débit du fluide sous pression par la partie de commande (10, 10A), **caractérisé en ce que** le dispositif de réglage comporte un canal (4) traversant le dispositif de réglage (1) dans sa direction axiale, et un bouchon (3, 3A, 3B, 3C) dans le canal,
le bouchon (3, 3A, 3B, 3C) étant agencé pour empêcher le fluide sous pression de s'écouler du ferme-porte par le canal (4) lors d'une utilisation normale du ferme-porte, et étant agencé pour céder en raison de la température et de la pression supérieures aux conditions normales, permettant au fluide sous pression de s'écouler du ferme-porte par le canal (4) lorsque le dispositif de réglage est supporté par le corps du ferme-porte.

2. Dispositif de réglage selon la revendication 1, **caractérisé en ce que** l'épaisseur du bouchon (3, 3A, 3B, 3C) est inférieure au diamètre du canal (4).

3. Dispositif de réglage selon la revendication 1, **caractérisé en ce que** l'épaisseur du bouchon (3, 3A, 3B, 3C) est supérieure ou égale au diamètre du canal (4).

4. Dispositif de réglage selon la revendication 1, **caractérisé en ce que** le corps (7) comprend ladite partie de commande (10A) et une partie métallique (7A) comportant ledit congé de filetage (8) et ladite partie de guidage (9), la partie de commande (10A) étant en plastique, et le canal (4) traverse la partie métallique et la partie de commande, le bouchon (3A, 3B) faisant partie de la partie de commande, et l'épaisseur du bouchon étant inférieure au diamètre du canal (4), ou supérieure au diamètre du canal (4), ou égale au diamètre du canal (4).

5. Dispositif de réglage selon la revendication 2 ou 3, **caractérisé en ce que** le bouchon (3) est dans le canal (4) et aligné avec le congé de filetage (8).

6. Dispositif de réglage selon la revendication 2, 3 ou 4, **caractérisé en ce que** le bouchon (3C) est situé à l'extrémité de la partie commande du canal (4).

7. Dispositif de réglage selon la revendication 2 ou 3, **caractérisé en ce que** le bouchon (3) est situé dans le canal (4) à un emplacement entre le congé de filetage (8) et la partie de guidage (9).

8. Dispositif de réglage selon la revendication 2 ou 3, **caractérisé en ce que** la partie de commande (10, 10A) comprend une zone de lunette (11), et le bouchon (3, 3A, 3B) est dans le canal et alignée avec la zone de lunette.

9. Dispositif de réglage selon la revendication 1, 3 ou 4, **caractérisé en ce que** la partie de commande (10, 10A) comprend une zone de lunette (11), et le bouchon (3A, 3B) se trouve dans le canal, au moins partiellement entre la zone de lunette (11) et le congé de filetage (8).

10. Dispositif de réglage selon la revendication 2 ou 3, **caractérisé en ce que** le bouchon (3C) est situé à l'extrémité de la partie de commande du canal (4), et que le bouchon comprend une projection annulaire (6) afin de fixer le bouchon au corps (7).

11. Dispositif de réglage selon l'une quelconque des revendications 1 à 10, **caractérisé en ce que** le bouchon (3, 3A, 3B, 3C) est en plastique.

12. Dispositif de réglage selon l'une quelconque des revendications 1 à 11, **caractérisé en ce que**, à différents endroits du canal, le diamètre (5A, 5B, 5C) du canal a au moins deux valeurs différentes.

13. Dispositif de réglage selon l'une quelconque des revendications 1 à 12, **caractérisé en ce que** le dispositif de réglage (1, 1A, 1B, 1C) est fixé au ferme-porte.

14. Dispositif de réglage selon l'une quelconque des revendications 1 à 13, **caractérisé en ce que** le bouchon (3, 3A, 3B, 3C) est un matériau fondant donnant environ dans la plage 60-100 degrés Celsius et dans la plage supérieure à 120 bar - inférieure à 160 bar.
